# EUROPEAN PATENT SPECIFICATION

(11) **EP 1 895 339 B1**
(45) Date of publication and mention of the grant of the patent: **27.07.2011**
(21) Application number: 07016905.7
(22) Date of filing: 29.08.2007
(51) Int. Cl.: G02B 6/44

(54) **A loose tube optical waveguide cable**
Optisches Kabel mit losen Hohladern
Câble de fibres optiques de gaine intermédiaire flottante

(30) Priority: 31.08.2006 WO PCT/NL2006/000440
(43) Date of publication of application: 05.03.2008
(73) Proprietor: Draka Comteq B.V., 1083 HJ Amsterdam (NL)
(72) Inventor: Nothofer, Klaus, 40669 Erkrath (DE); Lausch, Peter, 47803 Krefeld (DE)
(74) Representative: Blokland, Arie

(56) References cited:
- WO-A-01/51554
- WO-A1-2005/040882
- US-A- 6 167 178
- US-A1- 2004 151 906
- CORNING CABLE SYSTEMS: "ALTOS LSZH Gel-Free Interlocking Armored Cables"[Online] March 2006 (2006-03), XP002421369 USA Retrieved from the Internet: URL:http://www.corningcablesystems.com/web /library/litindex.nsf/$all/LAN-491-EN/$fil e/LAN-491-EN.pdf> [retrieved on 2007-02-21]
- Corning Cable Systems, Munich: "Fiber optic Cables", Publicis MCD Corporate Publishing ISBN: 3-89578-162-2 pages 112-113,

## Description

The present invention relates to loose tube optical waveguide fiber cable which is optimized for easy and fast installation as plenum cable, e.g. in customer premises for FTTH (fiber to the home) applications.

Optical waveguide fibers are normally provided with a plastic protective coating applied by the fiber manufacturer directly over the cladding in order to protect the fiber.

In tight buffered cables, a protective tube is applied by the cable manufacturer directly to the outer surface of the fiber coating applied by the fiber manufacturer so that the fiber and the tube are in contact along substantially their length. Such an optical fiber cable is known from US patent number 5,627,932.

In loose tube or composite buffer constructions, the coated optical fiber is separated from the protective tube. Such a cable is known from US patent number 6,091,871, wherein the reinforced optical fiber cable comprises a protective tube for protecting optical fibers and a reinforcing layer and reinforcing rods around said protective tube together with an outer sheath. Such a cable has rods that are relatively stiff and which are embedded in the sheath, parallel to the axis of the cable. These rods may be made of reinforced plastic material or of steel. In addition, the inside space in which the optical waveguides are received contains a filler material serving to protect the optical waveguides against penetration of moisture.

In SEDI FIBRES OPTIQUES PRODUCT CATALOG, February 2002 (2002-02), France a loose tube optical waveguide fibre assembly made of a material that is not flame retardant is disclosed.

In CORNING CABLE SYSTEMS: "ALTOS LSZH Gel-Free Interlocking Armored Cables" [Online] March 2006 (2006-03), USA retrieved from the Internet:URL:http://www.corningcablesystems.com/web/library/litindex.nsf/$all/LAN-491-EN/$file/LAN-491-EN.pdf> [retrieved on 2007-02-21] is disclosed a loose tube optical waveguide fibre assembly made of a material that is not flame retardant, wherein the tubes are arranged inside an outer flame retardant sheath. The space between the optical waveguide fibres and the tube is filled with swellable materials.

GB 1 529 001 relates to an optical conductor for use in an optical cable comprising a glass fiber and a protective sheath surrounding said glass fiber, wherein said protective sheath is composed of two layers of different synthetic resin materials, i.e. an inner layer consisting of polystyrene or a fluorinated polymer, and an outer layer consisting of a polyamide, a polyterephthalate, a polypropylene, or polyethylene.

U.S. patent No. 6,167,178 relates to a fiber optic cable comprising at least one optical fiber having a buffer layer formed of a flame retardant polyolefin material, said buffer layer being tightly formed about said optical fiber thereby defining a tight buffer layer, a layer of strength members, and a cable jacket surrounding said optical fiber and in contact with at least some of said strength members.

One of the disadvantages of such a tight buffered cables is that they are expensive and that access to the fibers is a time consuming process. One of the disadvantages of central filled loose tubes is that they are expensive, too, as well that fiber cleaning is necessary. In addition, these normally jelly filled central loose tubes have a high minimum cable bend radii due to kinking of the loose tube.

One of the objects of the present invention is to provide a loose tube optical waveguide fiber cable which is suitable for fixed in-house cabling and comprises extremely low-cost for a large-scale installation of FTTH.

Another object of the present invention is to provide a loose tube optical waveguide fiber cable which has a reduced fiber access time compared to other cable designs, e.g. tight buffered designs.

These and other objects are provided, according to the present invention, by providing a loose tube optical waveguide fiber cable, comprising
(a) two or more optical waveguides, and
(b) a protective tube loosely surrounding said two or more optical waveguides, said protective tube having an inner diameter and an outer diameter, said cable containing no gel - like compounds and no strengthening elements, wherein the wall thickness of the protective tube is in a range of 0,3 to 0,45 times the outer diameter of the tube.

The cable according to the present invention preferably comprises a minimum static bend radius of 25 mm with standard single mode fibers and of 10 mm with low-bend loss fibers.

The material of the protective tube is preferably a halogen free flame retardant polymer. A preferred material of the protective tube is a flame retardant material with a high degree of inorganic fillers, especially a density of > 1.35 g/cm³. According to a preferred embodiment the inner diameter of the protective tube of the loose tube optical waveguide fiber cable is at least 0.5 mm greater than the diameter of the closest circle around said two or more optical waveguides.

The present invention provides a cable with two or more optical waveguides surrounded by a single polymer jacket, wherein no filling gels, swellable materials and no strengthening elements, like rods or yarns are used. Such a cable is to be regarded as a totally dry structure. The term "single" means a protective tube made of one material, i.e. a single layer protective tube. The protective tube according to the present invention does not contain any other construction elements other than the optical waveguides.

Fiber access is very easy due to the use of halogen free fire retardant sheathing material made of thermoplastics with a high degree of inorganic fillers, as this material breaks easily when an initial cut is made.

A simple way to access the optical fibres is to do a circular cut with conventional knife without cutting through completely, then break the protective sheath by repeated bending and pull away the protective sheath over the optical fibres. Because of the absence of any filling compound in the tube this can be done in one operation over the desired length.

Another possibility is to use a conventional cable stripper, thoroughly adjusted to not cut through the inner surface of the sheath. Then break the sheath by repeated bending and pull away the sheath over the optical fibres. Because of the absence of any filling compound in the tube this can be done in one operation over the desired length.

The method for manufacturing the loose tube optical waveguide fiber cable is similar to buffer tube extrusion at standard secondary coating lines. For maintaining certain values of excess fibre length the fibre pay off is equipped with tension control device. Typical values are around 0.5 to 2 N. The fibres passes the extruder crosshead. The extruder is typically equipped with special designed screw, breaker, crosshead and tooling for the needs of flame retardant material. Adjacent to the first cooling section a pull-off capstan or similar device is located. The cable is turned at least with 1 turn - typically 2 to 4 turns- around the capstan. This capstan is mandatory because due to the lack of filling compound the capstan is coupling the fibres to the tube. Also the distance between crosshead and capstan is affecting the excess fibre length, as well as cooling conditions and the tension controlled between capstan and downstream pulling device and between pulling device and take-up.

Examples of the materials which can be used for the protective tube are DRAKA DHF9822, DHF9761 and Scapa MEGOLON S 550.

Those materials are in general composed of polymers or copolymers of polyolefins, -also other plastic materials such as EVA, polyamides or polyphenylene ester might be suitable- filled with mineral fillers (i.e. aluminium hydroxide, magnesium hydroxide) to give the desired level of flame retardance. Typically they contain also additional components such as UV- stabilizers, antioxidants, colour pigments and processing additives.

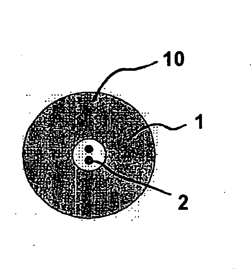

A loose tube optical waveguide fiber cable 10 may be constructed as shown in the sole figure. Cable 10 contains two optical fibers 2 surrounded by a coating (not shown) applied directly over the optical fiber 2. Optical fiber 2 may contain a core and a cladding surrounding the core, with one or more polymer coatings applied over the cladding. The outer jacket or protective tube 1 loosely surrounds optical fibers 2 and is formed of flame-retardant material. Optical fibers 2 are loosely provided within the protective tube 1. The number of optical fibers 2 is not restricted to a specific number. Cable 10 contains no gel-like compounds, nor any strengthening members. Cable 10 is suitable for riser or plenum applications.

## Claims

1. A loose tube optical waveguide fiber cable (10), comprising
(a) two or more optical waveguides (2), and
(b) a protective tube (1) loosely surrounding said two or more optical waveguides (2) said protective tube (1) having an Inner diameter and an outer diameter, said cable containing no gel - like compounds and no strengthening elements, **characterized in that**
the wall thickness of the protective tube (1) is in a range of 0.3 - 0.45 times the outer diameter of the protective tube (1).

2. A loose tube optical waveguide fiber cable (10) according to claim 1, wherein the material of the protective tube (1) is a halogen free flame retardant polymer.

3. A loose tube optical waveguide fiber cable (10) according to any one of the proceeding claims, wherein the inner diameter of said protective tube (1) is at least 0.5 mm greater than the diameter of the closest circle around said two or more optical waveguldes (2).

4. The use of a loose tube optical waveguide fiber cable (10) according to any one of the proceeding claims in riser or plenum applications.

## Patentansprüche

1. Lichtwellenleiterfaserkabel (10), das lose in ein Rohr eingelegt ist und Folgendes aufweist:
(a) zwei oder mehr Lichtwellenleiter (2), und
(b) ein Schutzrohr (1), das die zwei oder mehr Lichtwellenleiter (2) lose umgibt, wobei das Schutzrohr (1) einen Innendurchmesser und einen Außendurchmesser hat, wobei das Kabel keine gelartigen Verbindungen und keine Versteifungselemente enthält, **dadurch gekennzeichnet, dass**
die Wanddicke des Schutzrohrs (1) im Bereich des 0,3- bis 0,45-fachen des Außendurchmessers des Schutzrohrs (1) liegt.

2. Lichtwellenleiterfaserkabel (10) nach Anspruch 1, das lose in ein Rohr eingelegt ist, wobei das Material des Schutzrohrs (1) ein halogenfreies, flammfestes Polymer ist.

3. Lichtwellenleiterfaserkabel (10) nach einem der vorhergehenden Ansprüche, das lose in ein Rohr eingelegt ist, wobei der Innendurchmesser des Schutzrohrs (1) um mindestens 0,5 mm größer ist als der Durchmesser des engsten Kreises um die zwei oder mehr Lichtwellenleiter (2).

4. Verwendung eines Lichtwellenleiterfaserkabels (10) nach einem der vorhergehenden Ansprüche, das lose in ein Rohr eingelegt ist, in Abzweig- oder Zusammenführungsanwendungen.

## Revendications

1. Câble de fibre de guide d'ondes optiques à tube flottant (10), comprenant
(a) deux guides d'ondes optiques (2) ou plus, et
(b) un tube protecteur (1) entourant de façon flottante lesdits deux guides d'ondes optiques (2) ou plus, ledit tube protecteur (1) ayant un diamètre interne et un diamètre externe, ledit câble ne contenant aucun composé de type gel et aucun élément de renfort, **caractérisé en ce que**
l'épaisseur de paroi du tube protecteur (1) est dans une plage de 0,3 à 0,45 fois le diamètre externe du tube protecteur (1).

2. Câble de fibre de guide d'ondes optiques à tube flottant (10) selon la revendication 1, dans lequel le matériau du tube protecteur (1) est un polymère ignifuge sans halogène.

3. Câble de fibre de guide d'ondes optiques à tube flottant (10) selon l'une quelconque des revendications précédentes, dans lequel le diamètre interne dudit tube protecteur (1) est au moins 0,5 mm plus grand que le diamètre du cercle le plus proche autour desdits deux guides d'ondes optiques (2) ou plus.

4. Utilisation d'un câble de fibre de guide d'ondes optiques à tube flottant (10) selon l'une quelconque des revendications précédentes dans des applications de colonne montante ou câble pour espacement.
